Europäisches Patentamt

(19) European Patent Office

Office européen des brevets

(11) Veröffentlichungsnummer: **0 126 439**
**B1**

(12) # EUROPÄISCHE PATENTSCHRIFT

(45) Veröffentlichungstag der Patentschrift:
**24.08.88**

(51) Int. Cl.⁴: **H 04 M 7/00,** H 04 Q 3/66

(21) Anmeldenummer: **84105623.7**

(22) Anmeldetag: **17.05.84**

(54) **Fernmeldenetz, insbesondere Fernsprechnetz, mit Netzknoten miteinander verbindenden und Netzausläufer bildenden Verbindungsleitungsbündeln.**

(30) Priorität: **20.05.83 DE 3318544**

(43) Veröffentlichungstag der Anmeldung:
**28.11.84 Patentblatt 84/48**

(45) Bekanntmachung des Hinweises auf die Patenterteilung:
**24.08.88 Patentblatt 88/34**

(84) Benannte Vertragsstaaten:
**DE FR GB IT NL SE**

(56) Entgegenhaltungen:
**TELEFON REPORT SIEMENS, Band 13, Nr. 4, Dezember 1977, Seiten 146-152, München, DE; G. WEGMANN: "Gesichtspunkte zur Einführung von EWS-Vermittlungen in bestehende Fernsprechnetze"**
**NT-NACHRICHTEN TELEFONBAU UND NORMALZEIT, Nr. 83, 1981, Seiten 57-62, Dreieich, DE; K.-H. POPPERT: "Modell einer zukünftigen Netzgestaltung mit dem zentralen Zeichenkanal ZZK"**
**POST OFFICE ELECTRICAL ENGINEERS' JOURNAL, Band 70, Nr. 2, Juli 1977, Seiten 81-85, London, GB; R.T. MAYNE u.a.: "The development of international telephone switching systems"**

(73) Patentinhaber: **Siemens Aktiengesellschaft Berlin und München, Witteisbacherplatz 2, D-8000 München 2 (DE)**

(72) Erfinder: **Wegmann, Gerhard, Ing. grad., Herterichstrasse 32, D-8000 München 71 (DE)**
Erfinder: **Wijnakker, Wilhelmus, Dipl.-Ing., Pichtstrasse 3, D-8000 München 70 (DE)**

## Beschreibung

Die Erfindung betrifft ein Fernmeldenetz, insbesondere Fernsprechnetz, mit sowohl Netzknoten miteinander verbindenden, als auch jeweils Netzausläufer bildenden Bündeln von Verbindungsleitungen und mit Netzinnenvermittlungsstellen, die in den Netzknoten vorgesehen sind und zur verbindungsindividuellen Zusammenschaltung von Verbindungsleitungen verschiedener Bündel zu gewählten Verbindungen dienen, und mit Peripherievermittlungsstellen an den Netzausläufern, und mit einer hierarchischen Struktur, durch die Peripherievermittlungsstellen gruppenweise über je ein Sternnetz von Bündeln (Direktwegbündeln, Letztwegbündeln) von Verbindungsleitungen jeweils mit einer pro Gruppe von Peripherievermittlungsstellen vorgesehenen und ihnen gemeinsamen Netzinnenvermittlungsstelle einer den Peripherievermittlungsstellen überlagerten Netzebene verbunden sind, und durch die Netzinnenvermittlungsstellen durch ein Maschennetz von Bündeln von Verbindungsleitungen direkt miteinander und/oder ebenfalls gruppenweise durch ein weiteres Sternnetz von Bündeln von Verbindungsleitungen mit einer pro Gruppe von Netzinnenvermittlungstellen der überlagerten Netzebene vorgesehenen und wiederum diesen gemeinsamen Netzinnenvermittlungsstelle wenigstens einer noch höheren Netzebene verbunden sind, und mit von dieser Netzhierarchie abweichenden Querleitungsbündeln, die Vermittlungsstellen jeweils der verschiedenen Netzebenen direkt miteinander verbinden und dadurch wenigstens teilweise vermaschen, und für deren Einsatz untere Grenzwerte für Verkehrswerte oder Leitungszahlen vorgegeben sind, die sich aufgrund von Wirtschaftlichkeitsfakten einerseits bei Verwendung von einzelnen Leitungen pro Querverbindungs-Leitungsbündel im Hinblick auf die hierfür erforderliche Anlegung einer Leitungsstrasse ergeben, und andererseits bei Einsatz von Übertragungssystemen mit jeweils einer gemeinsamen Übertragungsleitung für eine systembedingte Anzahl von Kanälen (je ein Kanal für jede der beiden Übertragungsrichtungen) aus dieser Anzahl herleiten, wobei immer ein Kanalpaar einer Verbindungsleitung entspricht.

Eine Schaltungsanordnung dieser Art ist bereits durch das Konferenzpapier vom «Second International Network Planning Symposium, ‹networks 83›, IEE Conference Publication Number 215, University of Sussex, Brighton U.K.» bekannt. Ferner sei auf die Zeitschrift «Unterrichtsblätter der Deutschen Bundespost» Jg. 1980, Heft 3, Seite 71ff. hingewiesen. Hierin sind die oben genannten Peripherievermittlungsstellen als «Endvermittlungsstellen EVST», und die Netzinnenvermittlungsstellen als «Knotenvermittlungsstellen KVST», als «Hauptvermittlungsstellen HVST» und als «Zentralvermittlungsstellen ZVST» bezeichnet. Auf Seite 72 ist in Bild 2 das Fernsprechvermittlungsnetz der Deutschen Bundespost dargestellt. Seine Grundstruktur ist durch ein Sternnetz bestimmt. In der obersten Netzebene sind die Vermittlungsstellen voll vermascht, d.h. durch ein Maschennetz von Verbindungsleitungsbündeln ist jede Vermittlungsstelle mit jeder anderen Vermittlungsstelle direkt verbunden. Dem in den übrigen Netzebenen vorgesehenen Sternnetz überlagert ist ein Netz von Querverbindungs-Leitungsbündeln. Hieraus ergibt sich ein Verbundnetz. Dessen hierarchische Struktur ist ihm vom Sternnetz her aufgeprägt. Das Maschennetz der Querverbindungs-Leitungsbündel weicht von der Systematik der Netzhierarchie des Sternnetzes ab. Diese Zusammenhänge, sowie die Vorteile eines Sternnetzes einerseits und die Vorteile eines Maschennetzes andererseits sind unter Bezugnahme auf die Gegebenheiten beim Verbundnetz der Deutschen Bundespost u.a. auch in der Deutschen Patentschrift 1 257 868 genauer erläutert. Danach liegt ein Vorteil des hierarchischen Sternnetzes u.a. in seiner klaren Gliederung, die einen übersichtlichen offenen Numerierungsplan erlaubt. Ferner weisen Sternnetze eine geringere Zahl umso stärkerer Leitungsbündel auf. Die Leitungsausnutzung insgesamt ist infolgedessen besser als in Maschennetzen. Demgegenüber liegt ein wesentlicher Vorteil von Maschennetzen gegenüber Sternnetzen darin, dass Maschennetze eine Verbindungsdurchschaltung in der Regel über insgesamt kürzere und damit wirtschaftlichere Verbindungswege erlauben. Gegenüber der strengen Hierarchie eines Sternnetzes stellen die Leitungsbündel eines Maschennetzes Querverbindungen dar, weswegen sie auch als «Querverbindungs-Leitungsbündel» bezeichnet werden. Ein Querweg ist ein Direktweg in einem hierarchischen Nachrichtennetz, der zwei oder mehr Abschnitte des Kennzahlweges umgeht. Querwege ermöglichen es also, Verbindungen über weniger Vermittlungsstellen herzustellen als bei Verwendung des Kennzahlweges, wodurch die Vermittlungsstellen insgesamt entlastet werden; sofern Querverbindungs-Leitungsbündel (entsprechend Querwegen) über eigene kürzere Trassen geführt werden, können Verbindungen auch über insgesamt kürzere Verbindungswege hergestellt werden. Dadurch kann also ein Nachteil von rein sternförmig aufgebauten Vermittlungsnetzen wesentlich eingeschränkt werden. Querverbindungs-Leitungsbündel werden insbesondere zwischen solchen Vermittlungsstellen angeordnet, die einen bedeutenden Verkehr miteinander haben. Diese Querverbindungs-Leitungsbündel überziehen also ein reines, in mehreren Netzebenen aufgebautes Sternnetz mit einem Maschennetz, welches nur insoweit ausgebaut und in sich geschlossen ist, wie es von den örtlichen Verkehrslasten zwischen den verschiedenen Vermittlungsstellen und der Wirtschaftlichkeit bestimmt ist.

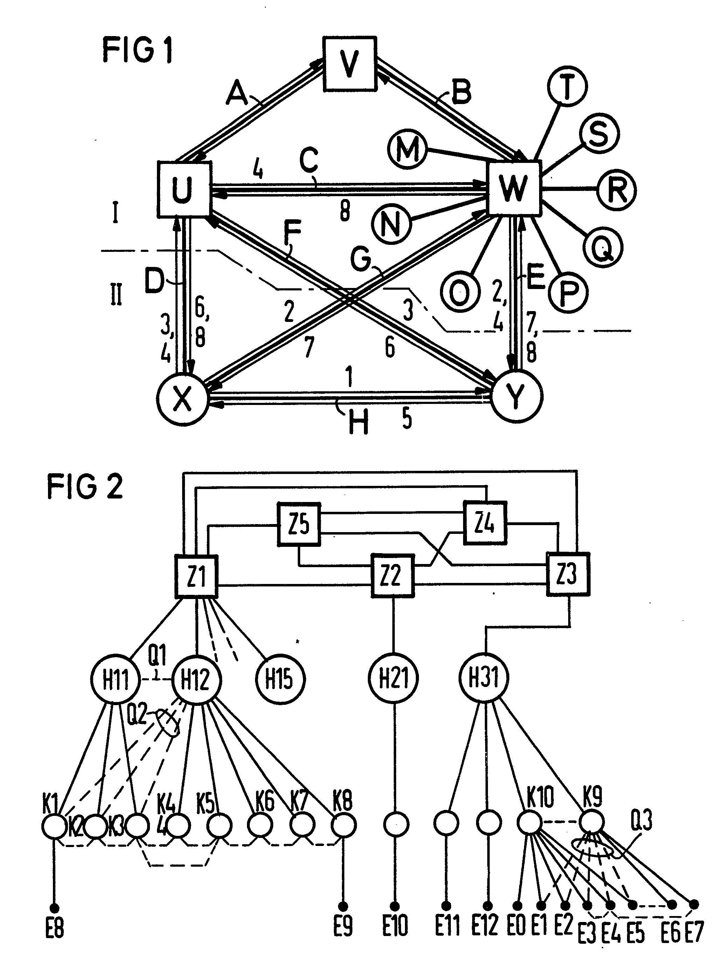

In Fig. 1 der Zeichnungen ist ein Netz mit zwei Netzebenen I und II dargestellt. Zu der oberen Netzebene I gehören die Netzinnenvermittlungsstellen U, V und W, die über Bündel A, B und C von Verbindungsleitungen miteinander verbunden sind; ferner sind über Netzausläufer bildende Bündel D und E die Peripherievermittlungsstellen X und Y der unteren Netzebene II mit den Netzin-

nenvermittlungsstellen U und W verbunden. Ferner sind weitere Peripherievermittlungsstellen M bis T mit der Netzinnenvermittlungsstelle W verbunden. Gleiches gilt für die Netzinnenvermittlungsstellen U und V, was jedoch nicht dargestellt ist. Insoweit entspricht das in Fig. 1 dargestellte Fernmeldenetz den im ersten Absatz aufgeführten Merkmalen, die die hierarchische Grundstruktur eines in mehreren Netzebenen aufgebauten Fernmeldenetzes betreffen. Zusätzlich zeigt Fig. 1 Querleitungsbündel F, G und H, die ebenfalls im ersten Absatz erwähnt worden sind. Ein solches Fernmeldenetz gemäss Fig. 1 lässt sich erweitern zu einem solchen Netz, wie es z.B. bei der Deutschen Bundespost praktisch im Einsatz ist, indem es in mehreren Netzebenen aufgebaut wird, wie es in den genannten «Unterrichtsblättern» auf Seite 72 dargestellt ist. Jedoch wird nachfolgend auf die vereinfachte Darstellung gemäss Fig. 1 Bezug genommen.

In Fig. 1 sind zusätzlich zu den Bündeln C bis H Pfeile eingezeichnet, die Wegemöglichkeiten für die Verkehrsbeziehung zwischen den Peripherievermittlungsstellen X und Y darstellen. Für die Verkehrsbeziehung von der Vermittlungsstelle X zu der Vermittlungsstelle Y sind die Wegemöglichkeiten mit 1 bis 4 und für die Verkehrsbeziehung von der Vermittlungsstelle Y zur Vermittlungsstelle X die Wegemöglichkeiten mit 5 bis 8 bezeichnet. Die Reihenfolgen dieser Wegemöglichkeiten sind durch die Reihenfolgen dieser Ziffern angegeben. Dabei bestehen in bekannter Weise Überlaufmöglichkeiten von Wegemöglichkeit zu Wegemöglichkeit. Die Wegemöglichkeiten 1 und 5 bestehen dabei für Verbindungsherstellungsvorgänge jeweils an erster Rangstelle, die Wegemöglichkeiten 2 und 6 an zweiter, die Wegemöglichkeiten 3 und 7 an dritter und die Wegemöglichkeiten 4 und 8 an vierter und letzter Rangstelle. Für diese letzte Wegemöglichkeit wurde auch der Begriff «Letztweg» geprägt.

Bei dem in Fig. 1 sehr vereinfacht dargestellten Fernmeldenetz fällt bereits die Vielfalt der Wegemöglichkeiten auf, die also trotz dieser Vereinfachung bereits gegeben ist. Geht man jedoch von durch die praktische Anwendung gegebenen Voraussetzungen aus, wie sie z.B. in dem Fachbuch von Rudolf Führer «Landesfernwahl» (Verlag R. Oldenburg, München 1958) auf Seite 59 ff dargestellt sind, so zeigt sich, wie unüberschaubar und wie gross die Vielfalt der Wegemöglichkeiten werden kann, und wie diese so gestaltet sein können, dass sie kaum noch technisch beherrschbar sind. Bei der bei der Deutschen Bundespost derzeit in grossem Umfange eingesetzten Technik (Richtungswählertechnik) war es deshalb hauptsächlich aus wirtschaftlichen Gründen erforderlich, bei der Einrichtung von Querleitungsbündeln Beschränkungen vorzusehen. Eine allgemeine Beschränkung bestand und besteht noch darin, dass Querleitungsbündel immer nur von den hinsichtlich der Netzhierarchie sich im aufsteigenden Weg befindenden Vermittlungsstellen ausgehen. Hierauf deutet auch die bereits genannte Deutsche Patentschrift 1 257 868 hin. Wenngleich eine solche Einschränkung nicht vom Netzaufbau her erforderlich ist, ergab sie sich von den vermittlungstechnischen Möglichkeiten her. – Für die in Fig. 1 gegebene Darstellung bedeutet dies, dass die Wegemöglichkeiten 3 und 7 entfallen. Ebenso könnte aber eine solche Einschränkung z.B. auch darin bestehen, dass stattdessen die Wegemöglichkeiten 2 und 6 entfallen.

Bekanntlich hat eine grosse Vielfalt von Wegemöglichkeiten von entsprechend vielen Querleitungsbündeln zur Folge, dass das Verkehrsaufkommen sehr aufgesplittert wird, und dass es pro Bündel entsprechend kleiner wird. Da aber – wie einleitend bereits angegeben wurde – für die Einrichtung von Querleitungsbündeln hinsichtlich ihrer jeweiligen Leitungsanzahl aus verschiedenen Gründen untere Grenzwerte vorgegeben sind, können solche Querleitungsbündel unwirtschaftlich werden. Obwohl also bei heutigem Stand der Entwicklung der vermittlungstechnischen Einrichtungen (Koppelfelder und deren Steuerungen mit rechnergesteuerter Verkehrslenkung – «Leitweglenkung») die diesbezüglichen Einschränkungen faktisch keine Zwangsläufigkeit mehr darstellen, also Querverbindungs-Leitungsbündel unter dem Gesichtspunkt der technischen Möglichkeiten der Verkehrslenkung (Leitweglenkung) in viel grösserem Umfange realisierbar wären, können Querverbindungs-Leitungsbündel aus den angegebenen Gründen dennoch unwirtschaftlich werden.

Hinsichtlich des Problems der Wirtschaftlichkeit von Querleitungsbündeln besteht für die Erfindung die Aufgabe, bei einer möglichst grossen Vielfalt von Wegemöglichkeiten günstige Voraussetzungen für einen wirtschaftlichen Betrieb von Querleitungsbündeln zu schaffen.

Die Erfindung löst die gestellte Aufgabe dadurch, dass eine Querleitungs-Verkehrsbeziehung, die jeweils zwischen den Peripherievermittlungsstellen bzw. Netzinnenvermittlungsstellen zweier Gruppen solcher Vermittlungsstellen besteht, generell darauf beschränkt ist, dass diejenigen Querleitungsbündel, die verschiedene Netzebenen miteinander verbinden (transversale Querleitungsbündel), jeweils nur zwischen den Peripherievermittlungsstellen bzw. Netzinnenvermittlungsstellen bildenden Vermittlungsstellen der einen Gruppe und der den Peripherievermittlungsstellen der anderen Gruppe gemeinsamen und demgemäss der nächsthöheren Netzebene angehörenden Netzinnenvermittlungsstelle bzw. derjenigen Netzinnenvermittlungsstelle der anderen Gruppe, die der betreffenden anderen Gruppe von Netzinnenvermittlungsstellen gemeinsam ist und demgemäss zur nächsthöheren Netzebene gehört, verlaufen, und dass diese Querleitungsbündel nicht nur zur Herstellung von Verbindungen von den Vermittlungsstellen der einen Gruppe zu denen der anderen Gruppe sondern auch zur Herstellung von Verbindungen in der umgekehrten Richtung vorgesehen sind, wodurch bei einem Verbindungsherstellungsvorgang von der einen Gruppe zu der anderen Gruppe über eine Querverbindungsleitung des betreffenden Querleitungsbündels jene in hinsichtlich der einander übergeordneten Netzebenen aufsteigendem Sinne und bei einem Verbindungsherstellungsvorgang von der anderen zu der einen Gruppe über eine dieser Querverbindungsleitungen diese in absteigendem Sinne belegt ist.

Durch die Erfindung werden also die auf diejenigen Querleitungsbündel treffenden Verkehre, die Vermittlungsstellen verschiedener Netzebenen miteinander verbinden (transversale Querleitungsbündel), auf eine geringere Anzahl von Querleitungsbündeln zusammengeführt, ohne dass dabei für die zwischen zwei Gruppen von Peripherievermittlungsstellen (bzw. zwei Gruppen von Netzinnenvermittlungsstellen) bestehende Verkehrsbeziehung die betreffende Querleitungs-Verbindungsmöglichkeit entfällt, die über eine einer Gruppe von Peripherievermittlungsstellen (bzw. einer Gruppe von Netzinnenvermittlungsstellen) gemeinsame Netzinnenvermittlungsstelle der nächsthöheren Netzebene verläuft, die also auch dem «Letztweg» ungleich ist, der ja über die beiden, den beiden Gruppen von Peripherievermittlungsstellen (bzw. den beiden Gruppen von Netzinnenvermittlungsstellen) gemeinsamen Netzinnenvermittlungsstellen der nächsthöheren Netzebene verläuft. Die Auswahlreihenfolge für die Verkehrslenkung

a) Durchschalteversuch über eine Leitung des direkt zwischen den Vermittlungsstellen X und Y verlaufenden Querleitungsbündels H,

b) Durchschalteversuch über nur eine der betreffenden beiden Netzinnenvermittlungsstellen der nächsthöheren Netzebene (also entweder Weg G oder Weg F),

c) Durchschalteversuch über die betreffenden beiden Netzinnenvermittlungsstellen der nächsthöheren Netzebene («Letztweg» D–C–E)
bleibt also völlig erhalten. Hierbei kann natürlich auch der erste Durchschalteversuch über das Querleitungsbündel H entfallen, sofern ein solches Querleitungsbündel nicht vorgesehen ist. Vorhandensein oder Nichtvorhandensein des Querleitungsbündels H ist also für die Erfindung nicht von Bedeutung. Ausschlaggebend für die Erfindung ist vielmehr die Zusammenführung der Verkehre zwischen den Vermittlungsstellen X und Y auf eine geringere Anzahl von transversalen Querleitungsbündeln, wobei also in Fig. 1 nur entweder das Querleitungsbündel G oder das Querleitungsbündel F vorgesehen ist. Gemäss den den transversalen Querleitungsbündeln zugeführten Verkehren werden diese Querleitungsbündel mit so vielen Leitungen bzw. Kanalpaaren nur eingerichtet, wenn die Bedingung des unteren Grenzwertes bezüglich der Anzahl von Leitungen bzw. Kanalpaaren pro Querleitungsbündel erfüllt ist und folglich solche Querleitungsbündel mit der erforderlichen Wirtschaftlichkeit betrieben werden können.

In Figur 2 der Zeichnungen ist ein Ausführungsbeispiel der Erfindung nur in wesentlich zu ihrem Verständnis beitragenden Bestandteilen dargestellt, worauf sie jedoch keineswegs beschränkt ist.

Wie bereits erwähnt wurde, ist in den bereits genannten «Unterrichtsblättern» auf Seite 20 auszugsweise das Landesfernwahlnetz der Deutschen Bundespost dargestellt. Hieran lehnt die Darstellung in Fig. 2 an. In einer obersten Netzebene sind 5 Zentralvermittlungsstellen Z1 bis Z5 dargestellt, die durch ein Maschennetz von Verbindungsleitungsbündeln untereinander verbunden sind. Mit jeder der Zentralvermittlungsstellen ist eine Anzahl von Hauptvermittlungsstellen durch je ein Sternnetz von Verbindungsleitungsbündeln verbunden. So ist z.B. jede der Hauptvermittlungsstellen H11 bis H15 über je ein Verbindungsleitungsbündel mit der Zentralvermittlungsstelle Z1 verbunden. Entsprechendes gilt für die Hauptvermittlungsstellen H21 und H31. Ferner ist jeweils eine Gruppe von Knotenvermittlungsstellen, z.B. die Knotenvermittlungsstelle K1 bis K3, über ein Sternnetz von Verbindungsleitungsbündeln jeweils mit einer dieser Gruppe zugeordneten Hauptvermittlungsstelle, z.B. H11, verbunden. Ebenso ist die Gruppe von Knotenvermittlungsstellen K4 bis K8 über ein Sternnetz von Verbindungsleitungsbündeln mit der Hauptvermittlungsstelle H12 verbunden. Entsprechendes gilt für die Hauptvermittlungsstellen H15, H21 und H31. Ferner bilden die Endvermittlungsstellen E1 bis E10 Gruppen von Vermittlungsstellen. Zum Beispiel bilden die Endvermittlungsstellen E0 bis E5 eine Gruppe. Einer Gruppe von Endvermittlungsstellen ist jeweils eine Knotenvermittlungsstelle, z.B. K10, zugeordnet. Der Gruppe von Endvermittlungsstellen E6 und E7 ist die Knotenvermittlungsstelle K9 zugeordnet. In Ortsnetzen ist es bei heutigem Stand der Entwicklung der Vermittlungstechnik darüber hinaus auch üblich, dass an Knotenvermittlungsstellen zusätzlich Teilnehmerstellen angeschlossen sind; in diesem Falle werden solche Knotenvermittlungsstellen auch «Teilnehmer-Transitvermittlungsstellen» genannt.

Die bisherige Beschreibung bezieht sich nur auf die Kennzahlwege (Letztwege) im Landesfernwahlnetz der Deutschen Bundespost; diese Wege werden insgesamt auch als «Grundnetz» bezeichnet. Es ist ein rein hierarchisch geordnetes Netz, wobei die Vermittlungsstellen der obersten Netzebene, das sind also die Zentralvermittlungsstellen Z1 bis Z5 durch ein Maschennetz von Leitungsbündeln in Verbindung miteinander stehen. Dieses rein hierarchische Netz ist in Fig. 2 mit Hilfe von durchgezogenen Linien dargestellt. Diesem Grundnetz (vergl. das bereits erwähnte Fachbuch «Landesfernwahl», Bild 21 auf Seite 60) ist in an sich bekannter Weise ein Maschennetz von Querverbindungsleitungen (gestrichelt gezeichnete Linien) überlagert. Dadurch ergibt sich das bereits in den «Unterrichtsblättern» (Seite 72) genannte Verbundnetz. In Figur 2 ist im wesentlichen nur das rein hierarchisch aufgebaute Stammnetz (Grundnetz) wiedergegeben. Die Querverbindungsleitungsbündel sind nur insoweit wiedergegeben, wie sie zum Verständnis der erfindungsgemässen Besonderheiten des erläuterten Ausführungsbeispiels beitragen.

Die Zentralvermittlungsstellen, Hauptvermittlungsstellen und Knotenvermittlungsstellen liegen in den bereits genannten Netzknoten. Diese Netzknoten sind über die Bündel von Verbindungsleitungen miteinander verbunden. In den Neztknoten liegen Netzinnenvermittlungsstellen. Hierunter sind die Zentralvermittlungsstellen, Hauptvermittlungsstellen und Knotenvermittlungsstellen zu verstehen. Die Bündel von Verbindungsleitungen gehören teilweise zu dem rein hierarchisch aufgebauten Stammnetz von Verbindungsleitungsbündeln und teilweise zu dem ihm überlagerten Maschennetz von Querverbindungsleitungsbündeln.

Die Verbindungsleitungsbündel verbinden die genannten Netzknoten miteinander, in denen die erwähnten Netzinnenvermittlungsstellen liegen. Ein Teil der Verbindungsleitungsbündel stellt aber auch Netzausläufer dar; nämlich diejenigen Verbindungsleitungsbündel, die die Endvermittlungsstellen E1 bis E10 mit den Knotenvermittlungsstellen verbinden. Die Endvermittlungsstellen wurden oben auch als «Peripherievermittlungsstellen» bezeichnet. Wie bereits bekannt, ist das hierarchisch aufgebaute Netz als ein Netz in mehreren Netzebenen gedacht, wobei der Ebene der Endvermittlungsstellen die Ebene der Knotenvermittlungsstelle überlagert ist, dieser wiederum die Ebene der Hauptvermittlungsstellen und dieser wiederum die Ebene der Zentralvermittlungsstellen.

Wie bereits erläutert, sind die Endvermittlungsstellen, z.B. E0 bis E5 zu einer Gruppe von Endvermittlungsstellen zusammengefasst. Dieser Gruppe ist die Knotenvermittlungsstelle K10 gemeinsam zugeordnet. Die Endvermittlungsstellen sind über einzelne Verbindungsleitungsbündel des hierarchischen Sternnetzes in der dargestellten Weise mit ihrer Knotenvermittlungsstelle K10 verbunden. Entsprechendes gilt für die Gruppe der Endvermittlungsstellen E6 und E7; diese sind über einzelne Verbindungsleitungsbündel des Sternnetzes mit ihrer gemeinsamen Knotenvermittlungsstelle K9 verbunden. Zwischen den beiden Gruppen E0 bis E5 und E6 bis E7 von Endvermittlungsstellen besteht eine Querleitungs-Verkehrsbeziehung. Diese kommt u.a. darin zum Ausdruck, dass die Endvermittlungsstellen E5 und E6 über ein Querverbindungs-Leitungsbündel unmittelbar miteinander in Verbindung stehen. Dies ist in Fig. 2 durch eine waagerecht zwischen diesen beiden Endvermittlungsstellen gestrichelte Linie dargestellt. Ebenfalls sind die Endvermittlungsstellen E4 und E7 über ein Querverbindungs-Leitungsbündel direkt miteinander verbunden. Der Kennzahlenweg für Verbindungen von einer Endvermittlungsstelle der einen Gruppe zu einer Endvermittlungsstelle der anderen Gruppe verläuft bekanntlich über die Knotenvermittlungsstelle K10, die Hauptvermittlungsstelle H31 und die Knotenvermittlungsstelle K9.

Soll nun z.B. eine Verbindung zwischen einer an eine Endvermittlungsstelle E5 und einer an die Endvermittlungsstelle E6 angeschlossenen Teilnehmerstelle hergestellt werden, so wird in an sich bekannter Weise in der Endvermittlungsstelle E5 zunächst ein Durchschalteversuch unternommen, bei dem die Verbindungsdurchschaltung über eine Leitung des Querleitungsbündels verlaufen würde, das zwischen den Endvermittlungsstellen E5 und E6 direkt verläuft. Eine weitere Durchschaltemöglichkeit besteht über einen Weg, der über die Knotenvermittlungsstelle K10 und K9 und über eine Leitung eines Querverbindungsleitungsbündels verläuft, das die Knotenvermittlungsstellen K10 und K9 unmittelbar miteinander verbindet (horizontal dargestellt). Eine weitere Durchschaltemöglichkeit besteht dann über die Hauptvermittlungsstelle H31 (Kennzahlenweg). Die technischen Einrichtungen zur Verkehrslenkung in den Vermittlungsstellen versuchen in an sich bekannter Weise, eine Verbindung jeweils über den kürzesten Weg herzustellen.

Ausserdem ist nun die Knotenvermittlungsstelle K9 über eine Schar Q3 von transv. Querverbindungs-Leitungsbündeln einzeln mit jeder der Endvermittlungsstellen E1 bis E5 verbunden. Diese gemeinsam mit Q3 bezeichneten Querverbindungsleitungsbündel eröffnen zusätzliche Durchschaltemöglichkeiten. Soll z.B. eine Verbindung zwischen einer Teilnehmerstelle, die an die Endvermittlungsstelle E7 angeschlossen ist, und einer Teilnehmerstelle, die an die Endvermittlungsstelle E4 angeschlossen ist, hergestellt werden, so wird bei einem ersten Durchschalteversuch geprüft, ob eine Leitung des Querverbindungsleitungsbündels frei ist, die direkt zwischen der Endvermittlungsstelle E7 und der Endvermittlungsstelle E4 verläuft. Ist in diesem Querverbindungsleitungsbündel keine Leitung frei, so wird in einem zweiten Durchschalteversuch geprüft, ob eine Querleitung in demjenigen Querleitungsbündel frei ist, das von der Knotenvermittlungsstelle K9 zur Endvermittlungsstelle E4 verläuft. Die Verbindung wird also zunächst von der Teilnehmerstelle des rufenden Teilnehmers über die Endvermittlungsstelle E7 zur Knotenvermittlungsstelle K9 hergestellt. Hier wird dann geprüft, ob eine Leitung im transvers. Querleitungsbündel frei ist, das von der Knotenvermittlungsstelle K9 zur Endvermittlungsstelle E4 verläuft. Ist auch hier keine freie Leitung zu finden, so wird in einem weiteren Durchschalteversuch geprüft, ob eine Leitung des Querverbindungsleitungsbündels frei ist, das von der Knotenvermittlungsstelle K9 unmittelbar zur Knotenvermittlungsstelle K10 verläuft. Trifft dies zu, so wird die Verbindung über die Endvermittlungsstelle E7, die Knotenvermittlungsstellen K9 und K10 und über die Endvermittlungsstelle E4 hergestellt. Findet sich auch in dem Querverbindungsleitungsbündel zwischen den Knotenvermittlungsstellen K9 und K10 keine freie Leitung, so muss die Verbindung über den Kennzahlweg (Letztweg) hergestellt werden, der also zusätzlich über die Hauptvermittlungsstelle H31 verläuft, es sei denn, es ist auch noch ein Querverbindungs-Leitungsbündel vorhanden, welches von der Hauptvermittlungsstelle H3 zur Endvermittlungsstelle E4 direkt verläuft; in diesem Fall wäre also auch noch eine Wegemöglichkeit über dieses Bündel gegeben.

Ist eine Verbindung in umgekehrter Richtung herzustellen, so kann eine Querverbindungsleitung aus einem der Querverbindungsleitungsbündel verwendet werden, die gemeinsam mit Q3 bezeichnet sind. Soll z.B. eine Verbindung zwischen einer Teilnehmerstelle, die an die Endvermittlungsstelle E4 angeschlossen ist, und einer Teilnehmerstelle, die an die Endvermittlungsstelle E7 angeschlossen ist, hergestellt werden, so wird ebenfalls in einem ersten Durchschalteversuch geprüft, ob eine Leitung des Querverbindungsleitungsbündels frei ist, das zwischen den Endvermittlungsstellen E4 und E7 unmittelbar verläuft. Ist dies nicht der Fall, so wird in einem zweiten Durchschalteversuch geprüft, ob eine Querleitung in demjenigen transvers. Querleitungsbündel frei ist, das zwischen der Endvermittlungsstelle E4 und der Knotenvermittlungsstelle K9 verläuft. Falls auch hier keine Leitung frei ist, können weitere Durchschalteversuche über die Knotenvermittlungsstellen K10 und K9 oder zusätzlich über die Hauptvermittlungsstelle H31 abgewickelt werden.

Bei den Querverbindungsleitungsbündeln, die gemeinsam mit Q3 bezeichnet sind, handelt es sich also um Bündel von transvers. Querleitungen, die Vermittlungsstellen verschiedener Netzebenen miteinander verbinden. Sie verlaufen von den Vermittlungsstellen der einen Gruppe von Endvermittlungsstellen zu der der anderen Gruppe von Endvermittlungsstellen gemeinsamen Knotenvermittlungsstelle K9. Zwischen den Endvermittlungsstellen E6 und E7 der anderen Gruppe verlaufen keine Querverbindungsleitungen zur Knotenvermittlungsstelle K10, die gemeinsam für die Gruppe E0 bis E5 von Endvermittlungsstellen vorgesehen ist. – Von den zur Knotenvermittlungsstelle K10 gehörenden Endvermittlungsstellen E0 bis E5 müssen nicht alle mit Querverbindungsleitungsbündeln beschaltet sein, z.B. ist die Endvermittlungsstelle E0 lediglich mit der Knotenvermittlungsstelle K10 über ein Verbindungsleitungsbündel verbunden, das zum Sternnetz gehört.

Die Querverbindungsleitungsbündel der Schar Q3 von Querverbindungsleitungsbündeln dienen also zur Herstellung von Verbindungen von einer der Teilnehmerstellen, die an eine der Endvermittlungsstellen E1 bis E5 angeschlossen sind zu einer Teilnehmerstelle, die an eine der Endvermittlungsstellen E6 und E7 angeschlossen sind, sowie zur Herstellung von Verbindungen in der umgekehrten Verbindungsaufbaurichtung. Diese Querverbindungs-Leitungsbündel werden bidirektional und/oder quasibidirektional betrieben. Im ersteren Falle kann jede der Leitungen des betreffenden Bündels für Verbindungen in beiden Verbindungsaufbaurichtungen verwendet werden. Bei quasibidirektionalen Leitungsbündeln ist ein Teil der Leitungen für Verbindungen in der einen Verbindungsaufbaurichtung und der andere Teil der Leitungen für Verbindungen in der anderen Verbindungsaufbaurichtung vorgesehen. Jede der Verbindungsleitungen kann in diesem Fall also nur zur Durchschaltung einer Verbindung in einer bestimmten Verbindungsaufbaurichtung verwendet werden. Das Bündel erscheint in seiner Gesamtheit aber bidirektional, d.h. es können Verbindungen über einen Teil seiner Leitungen in der einen Verbindungsaufbaurichtung und Verbindungen über einen anderen Teil seiner Leitungen in der anderen Verbindungsaufbaurichtung hergestellt werden. Zweckmässig kann es auch sein, ein Verbindungsleitungsbündel teils quasibidirektional und teils bidirektional hinsichtlich der in ihm zusammengefassten Leitungen zu betreiben. – Bei den Verbindungsleitungsbündeln, insbesondere den Querverbindungsleitungsbündeln kann es sich ausser um Leitungen über galvanisch durchgeschaltete Stromwege auch um Kanalpaare von Trägerfrequenzübertragungseinrichtungen sowie um Kanalpaare von PCM-Systemen handeln.

Im linken Teil der Figur 2 ist ein Beispiel dafür gegeben, dass die Erfindung sich in jeder anderen der verschiedenen Netzebenen anwenden lässt. So bilden die Knotenvermittlungsstellen K1 bis K3 eine Gruppe von Knotenvermittlungsstellen. Die Knotenvermittlungsstellen K4 bis K8 bilden eine andere Gruppe von Knotenvermittlungsstellen. Der einen Gruppe ist die Hauptvermittlungsstelle H11 gemeinsam zugeordnet und der anderen Gruppe die Hauptvermittlungsstelle H12. Die Schar von Querverbindungsleitungsbündeln Q2 verbindet die Knotenvermittlungsstellen der einen Gruppe mit der der anderen Gruppe gemeinsamen Hauptvermittlungsstelle H12. Die Knotenvermittlungsstellen können ebenfalls untereinander über direkt verlaufende Querverbindungsleitungsbündel verbunden sein, die in Fig. 2 horizontal gestrichelt dargestellt sind. Auch die Hauptvermittlungsstellen H11 u. H12 sind über ein Querverbindungsleitungsbündel Q1 unmittelbar miteinander verbunden. Auch bei den Gruppen K1 bis K3, sowie K4 bis K8 von Knotenvermittlungsstellen ist vorgesehen, dass Verbindungen von einer Knotenvermittlungsstelle der einen Gruppe zu einer Knotenvermittlungsstelle der anderen Gruppe sowie Verbindungen von Knotenvermittlungsstellen der anderen Gruppe zu einer Knotenvermittlungsstelle der einen Gruppe über eine der Leitungen durchgeschaltet werden kann, die zu einem Querverbindungsleitungsbündel der Schar Q2 von Querverbindungsleitungsbündeln gehört.

Wie aus Fig. 2 der Zeichnungen hervorgeht, ist die eine Gruppe K1 bis K3 von Knotenvermittlungsstellen mit der der anderen Gruppe K4 bis K8 von Knotenvermittlungsstellen gemeinsamen Hauptvermittlungsstelle H12 nur über Querverbindungsleitungsbündel Q2 verbunden. Grundsätzlich wäre es aber auch denkbar, dass die Knotenvermittlungsstellen der anderen Gruppe K4 bis K8 mit der der einen Gruppe K1 bis K3 von Knotenvermittlungsstellen gemeinsamen Hauptvermittlungsstelle H11 direkt miteinander verbunden wären, d.h. anstelle der Querverbindungsleitungsbündel Q2. Es ist aber vorgesehen, dass bei Bestehen der bei einer Querleitungs-Verkehrsbeziehung zwischen den Vermittlungsstellen der beiden Gruppen von Vermittlungsstellen gegebenen beiden Möglichkeiten der Einrichtung von Querleitungsbündeln diejenige realisiert wird, welche die wirtschaftlichere ist. In dem zuletzt beschriebenen Fall ist die wirtschaftlichere Lösung die Einrichtung der Querverbindungsleitungsbündel Q2, weil insgesamt nur 3 Querverbindungsleitungsbündel einzurichten sind, wohingegen bei einer Verbindung der Knotenvermittlungsstellen K4 bis K8 mit der Hauptvermittlungsstelle H11 durch Querverbindungsleitungsbündel anstelle von 3 Querverbindungsleitungsbündeln insgesamt 5 Querverbindungsleitungsbündel vorgesehen werden müssten. – Im Fall der Endvermittlungsstellen E1 bis E7 und der Knotenvermittlungsstellen K9 und K10 läge dann die grössere Wirtschaftlichkeit z.B. in den Leitungslängen. Wie aus Fig. 2 zu entnehmen ist, sind die Leitungslängen zwischen der Knotenvermittlungsstelle K9 und den Endvermittlungsstellen E1 bis E5 andererseits wesentlich geringer als Leitungslängen zwischen den Endvermittlungsstellen E6 und E7 einerseits und der Knotenvermittlungsstelle K10 andererseits, vorausgesetzt, dass eigene Trassen für diese Querverbindungs-Leitungsbündel vorhanden sind. Wenn solche Querverbindungs-Leitungsbündel über gleiche Trassen laufen, wie die im Kennzahlweg (Letztweg) liegenden Bündel, wird aber dennoch der Vorteil erzielt, dass die Vermittlungsstellen insgesamt weniger belastet werden.

– Dem Gesichtspunkt der Leitungslängen kann auch der Gesichtspunkt der Schwierigkeit bei der Anlegung von Leitungstrassen entsprechen. Ferner kann auch bei der Auswahl zwischen den beiden Möglichkeiten, entweder Querverbindungsleitungsbündel zwischen den Endvermittlungsstellen E1 bis E5 einerseits und der Knotenvermittlungsstelle K9 andererseits oder zwischen den Endvermittlungsstellen E6 bis E7 einerseits und der Knotenvermittlungsstelle K10 andererseits vorzusehen, danach vorgegangen werden, dass die betreffenden Querverbindungsleitungsbündel dort eingerichtet werden, so das grössere Verkehrsaufkommen auftritt.

**Patentansprüche**

1. Fernmeldenetz, insbesondere Fernsprechnetz, mit sowohl Netzknoten miteinander verbindenden, als auch jeweils Netzausläufer bildenden Bündeln von Verbindungsleitungen und mit Netzinnenvermittlungsstellen, die in den Netzknoten vorgesehen sind und zur verbindungsindividuellen Zusammenschaltung von Verbindungsleitungen verschiedener Bündel zu gewählten Verbindungen dienen, und mit Peripherievermittlungsstellen an den Netzausläufern, und mit einer hierarchischen Struktur, durch die Peripherievermittlungsstellen gruppenweise über je ein Sternnetz von Bündeln (Direktwegbündeln, Letztwegbündeln) von Verbindungsleitungen jeweils mit einer pro Gruppe von Peripherievermittlungsstellen vorgesehenen und ihnen gemeinsamen Netzinnenvermittlungsstelle einer den Peripherievermittlungsstellen überlagerten Netzebene verbunden sind, und durch die Netzinnenvermittlungsstellen durch ein Maschennetz von Bündeln von Verbindungsleitungen direkt miteinander und/oder ebenfalls gruppenweise durch ein weiteres Sternnetz von Bündeln von Verbindungsleitungen mit einer pro Gruppe von Netzinnenvermittlungsstellen der überlagerten Netzebene vorgesehenen und wiederum diesen gemeinsamen Netzinnenvermittlungsstelle wenigstens einer noch höheren Netzebene verbunden sind, und mit von dieser Netzhierarchie abweichenden Querleitungsbündeln, die Vermittlungsstellen jeweils der verschiedenen Netzebenen direkt miteinander verbinden und dadurch wenigstens teilweise vermaschen, und für deren Einsatz untere Grenzwerte für Verkehrswerte oder Leitungszahlen vorgegeben sind, die sich aufgrund von Wirtschaftlichkeitsfakten einerseits bei Verwendung von einzelnen Leitungen pro Querverbindungs-Leitungsbündel im Hinblick auf die hierfür erforderliche Anlegung einer Leitungstrasse ergeben, und andererseits bei Einsatz von Übertragungssystemen mit jeweils einer gemeinsamen Übertragungsleitung für eine systembedingte Anzahl von Kanälen (je ein Kanal für jede der beiden Übertragungsrichtungen) aus dieser Anzahl herleiten, wobei immer ein Kanalpaar einer Verbindungsleitung entspricht, dadurch gekennzeichnet, dass eine Querleitungs-Verkehrsbeziehung, die jeweils zwischen den Peripherievermittlungsstellen bzw. Netzinnenvermittlungsstellen zweier Gruppen solcher Vermittlungsstellen besteht, generell darauf beschränkt ist, dass diejenigen Querleitungsbündel, die verschiedene Netzebenen miteinander verbinden (transversale Querleitungsbündel), jeweils nur zwischen den Peripherievermittlungsstellen bzw. Netzinnenvermittlungsstellen bildenden Vermittlungsstellen der einen Gruppe und der den Peripherievermittlungsstellen der anderen Gruppe gemeinsamen und demgemäss der nächsthöheren Netzebene angehörenden Netzinnenvermittlungsstelle bzw. derjenigen Netzinnenvermittlungsstelle der anderen Gruppe, die der betreffenden anderen Gruppe von Netzinnenvermittlungsstellen gemeinsam ist und demgemäss zur nächsthöheren Netzebene gehört, verlaufen, und dass diese Querleitungsbündel nicht nur zur Herstellung von Verbindungen von den Vermittlungsstellen der einen Gruppe zu denen der anderen Gruppe sondern auch zur Herstellung von Verbindungen in der umgekehrten Richtung vorgesehen sind, wodurch bei einem Verbindungsherstellungsvorgang der einen Gruppe zu der anderen Gruppe über eine Querverbindungsleitung des betreffenden Querleitungsbündels jene in hinsichtlich der einander übergeordneten Netzebenen aufsteigendem Sinne, und bei einem Verbindungsherstellungsvorgang von der anderen zu der einen Gruppe über eine dieser Querverbindungsleitungen diese in absteigendem Sinne belegt ist.

2. Fernmeldenetz nach Anspruch 1, dadurch gekennzeichnet, dass bei Bestehen der bei einer Querleitungs-Verkehrsbeziehung zwischen den Vermittlungsstellen der beiden Gruppen von Vermittlungsstellen gegebenen beiden Möglichkeiten der Einrichtung von Querleitungsbündeln diejenige realisiert wird, welche die kürzeren Leitungslängen für die betreffenden Querleitungsbündel und/oder die geringere Anzahl von einzurichtenden Querleitungsbündel zur Folge hat und/oder diejenige, welche dem stärkeren Verkehrsaufkommen entspricht.

3. Fernmeldenetz nach Anspruch 1, dadurch gekennzeichnet, dass die Leitungen eines Querleitungsbündels hinsichtlich der Verbindungsherstellung bidirektional sind und/oder quasibidirektional.

**Claims**

1. A telecommunications network, in particular a telephone network, comprising groups of connection lines which interconnect network nodes and form network branches, and comprising network internal exchanges which are arranged at the network nodes and which, individually in respect of each connection, interconnect connection lines of different groups for selected connections, and comprising peripheral exchanges in the network branches, and comprising a hierarchical structure, by means of which peripheral exchanges are connected in groups via a star network of groups of connection lines (direct (first-choice) routes, last-choice routes) to a network internal exchange, which is provided in respect of each group of peripheral exchanges and is commonly assigned thereto, of a network level superimposed upon the peripheral exchanges, and by which network internal exchanges are directly connected to one another by a meshed network of groups of connection lines and/or are connected, likewise in groups, by a further star network of groups of connection lines to a network internal exchange, which is provided in respect of each group of network internal exchanges of the superimposed network level and again is commonly assigned thereto, of at least one even higher network level, and comprising direct line groups which deviate from this network hierarchy and which directly interconnect – and thus at least partially intermesh – the exchanges of the different network levels, and for the use of which lower limit values are imposed for traffic values or line numbers, where, on the basis of factors of economy, on the one hand when individual lines are used in respect of each direct connection line group said limit values are governed by the requisite connection of a line path, and on the other hand when transmission systems are used comprising a common transmission line for a system-related number of channels (one channel for each of the two transmission directions) said limit values are governed by this number, where one channel pair in each case corresponds to one connection line, characterised in that a direct line traffic relationship between the periperal exchanges and network internal exchanges of two groups of such exchanges is generally limited inasmuch as those direct line groups which interconnect different network levels (transversal direct line groups) extend only between the exchanges of the first group, which form the peripheral exchanges and network internal exchanges, and the network internal exchange of the other group which is common to the peripheral exchanges of the other group and thus is assigned to the next higher network level, and/or the network internal exchange of the other group which is common to the respective other group of network internal exchanges and is thus assigned to the next higher network level, and that these direct line groups serve not only to establish connections from the exchanges of the first group to those of the other group, but also to establish connection in the reverse direction, whereby in the vent of a connection establishment procedure between the first group and the other group via a directconnection line of the respective direct line group, this line is seized in an ascending direction in respect of the mutually superordinated network levels, and in the case of a connection establishment procedure from the other group to the first group via one of these direct connection lines, this line is seized in the descending direction.

2. A telecommunications network as claimed in claim 1, characterised in that when both of the possibilities of setting up direct line groups, provided for direct line traffic relationship between the exchanges of the two groups of exchanges, exist, the possibility which results in the shorter line lengths for the respective direct line groups and/or the smaller number of direct line groups to be set up and/or the possibility corresponding to the higher incidence of traffic is implemented.

3. A telecommunications network as claimed in claim 1, characterised in that the lines of a direct line group are bidirectional and/or quasi-bidirectional in respect of the connection establishment.

**Revendications**

1. Réseau de télécommunications, notamment réseau téléphonique, comportant des faisceaux de lignes de jonction, reliant entre eux des nœuds du réseau et formant également respectivement des ramifications du réseau, et des centraux internes au réseau, qui sont prévus aux nœuds du réseau et servent à réaliser le raccordement, prévu pour chaque liaison, de lignes de jonction de différents faisceaux pour l'obtention de liaisons choisies, et des centraux périphériques raccordés aux ramifications du réseau et possédant une structure hiérarchisée, selon laquelle des centraux périphériques sont réunis, par groupes, par l'intermédiaire de réseaux respectifs en étoile de faisceaux (faisceaux de voies de transmission directe, faisceaux de voies d'acheminement final) de lignes de jonction, respectivement à un central interne au réseau, qui est prévu pour chaque groupe de centraux périphériques et leur est commun, d'un plan du réseau situé à un rang supérieur par rapport aux centraux périphériques, et selon laquelle des centraux internes au réseau sont reliés par un réseau maillé de faisceaux de lignes de jonction directement entre eux et/ou également par groupes, au moyen d'un autre réseau en étoile de faisceaux de lignes de jonction, à un central interne au réseau, prévu pour chaque groupe de centraux internes au réseau appartenant au plan du réseau de rang supérieur et commun à nouveau à ces centraux, d'au moins un plan du réseau encore plus élevé, et comportant des faisceaux de lignes transversales, qui sont en dehors de cette hiérarchie du réseau, relient directement entre eux des centraux appartenant aux différents plans respectifs du réseau et interconnectent de ce fait ces centraux au moins partiellement, et pour l'utilisation desquels, il est prévu, en ce qui concerne les valeurs de trafic ou les nombres de lignes, des valeurs limites inférieures qui sont obtenues d'une part sur la base de données de rentabilité dans le cas de l'utilisation de différentes lignes pour chaque faisceau de lignes de jonction transversales en rapport avec l'installation, nécessaire à cet effet, de trajets de lignes, et sont fournies d'autre part dans le cas de l'utilisation de systèmes de transmission comportant respectivement une ligne commune de transmission pour un nombre, conditionné par le système, de canaux (respectivement un canal pour chacun des deux sens de transmission), à partir de ce nombre, auquel cas un couple de canaux correspond toujours à une ligne de jonction, caractérisé en ce qu'une transmission de trafic par les lignes transversales, qui existe respectivement entre les centraux périphériques ou les centraux internes au réseau de deux groupes de tels centraux, est en général limitée au fait que les faisceaux de lignes transversales, qui relient entre eux différents plans du réseau (faisceaux transversaux de lignes transversales), s'étendent respectivement uniquement entre les centraux, qui forment des centraux périphériques ou des centraux internes au réseau, d'un groupe et le central interne au réseau de l'autre groupe, qui est commun aux centraux périphériques de l'autre groupe et appartient par conséquent au plan immédiatement supérieur du réseau, ou le central interne au réseau dudit autre groupe, qui est commun à cet autre groupe considéré de centraux internes au réseau et appartient par conséquent au plan immédiatement supérieur du réseau, et que ces faisceaux de liaisons transversales sont prévus non seulement pour l'établissement de liaisons à partir des centraux d'un groupe en direction des centraux de l'autre groupe, mais également pour l'établissement de liaisons dans le sens inverse, ce qui a pour effet que, dans le cas d'un processus d'établissement d'une liaison d'un groupe en direction de l'autre groupe par l'intermédiaire d'une ligne de jonction transversale du faisceau considéré de lignes transversales, cette ligne est occupée dans le sens montant, considéré en rapport avec les plans superposés du réseau, et, dans le cas d'un processus d'établissement d'une liaison depuis l'autre groupe en direction du premier groupe par l'intermédiaire de l'une de ces lignes de jonction transversales, cette ligne est occupée dans le sens descendant.

2. Réseau de télécommunications suivant la revendication 1, caractérisé par le fait que dans le cas de l'existence des deux possibilités, indiquées pour une transmission de trafic par des lignes transversales entre les centraux des deux groupes de centraux, d'installation de faisceaux de lignes transversales, la possibilité utilisée est celle qui fournit les plus courtes longueurs de lignes pour les faisceaux considérés de lignes transversales et/ou le nombre le plus faible de faisceaux, devant être installés, de lignes transversales et/ou qui correspond à la charge la plus intense de trafic arrivant.

3. Réseau de télécommunications suivant la revendication 1, caractérisé par le fait que les lignes d'un faisceau de lignes transversales sont bidirectionnelles et/ou quasi-bidirectionnelles en ce qui concerne l'établissement des liaisons.

FIG 1

FIG 2